# EUROPÄISCHE PATENTSCHRIFT

(11) **EP 4 411 426 B1**
(45) Veröffentlichungstag und Bekanntmachung des Hinweises auf die Patenterteilung: **15.01.2025**
(21) Anmeldenummer: 23154589.8
(22) Anmeldetag: 02.02.2023
(51) Int. Cl.: G01V 8/20

(54) **LICHTVORHANG**
LIGHT CURTAIN
RIDEAU LUMINEUX

(43) Veröffentlichungstag der Anmeldung: 07.08.2024
(73) Patentinhaber: Leuze electronic GmbH + Co. KG, 73277 Owen/Teck (DE)
(72) Erfinder: Heckmayr, Alexander, 86807 Buchloe (DE); Olbrich, Sebastian, 80992 München (DE); Hartl, Paul, 80797 München (DE); Feller, Bernhard, 86316 Friedberg (DE); Auer, Robert, 85540 Haar (DE); Tkach, Gennady, 81373 München (DE)
(74) Vertreter: Ruckh, Rainer Gerhard

(56) Entgegenhaltungen:
- EP-A2- 2 444 825
- CN-A- 108 241 177
- DE-U1- 202008 014 137
- US-A- 3 970 846
- US-A1- 2012 001 062

## Beschreibung

Die Erfindung betrifft einen Lichtvorhang.

Ein derartiger Lichtvorhang ist beispielsweise aus der DE 102010 048 941 A1 oder der DE 10 2008 050 943 A1 vorbekannt. Der Lichtvorhang dient zur Überwachung von Objekten in einem Überwachungsbereich. Insbesondere ist der Lichtvorhang als Sicherheits-Lichtvorhang ausgebildet, der im Bereich der Sicherheitstechnik zur Überwachung von Gefahrenbereichen eingesetzt wird. Der Lichtvorhang umfasst eine Anordnung von Sendern die im Gehäuse einer Sendereinheit untergebracht sind. Weiterhin ist eine Anordnung von Empfängern vorgesehen, die in einem Gehäuse einer Empfängereinheit untergebracht sind. Die Sender- und Empfängereinheiten sind an gegenüberliegenden Rändern des Überwachungsbereichs angeordnet. Bei freiem Überwachungsbereich sind die von einem Sender emittierten Lichtstrahlen auf einen zugeordneten Empfänger geführt. Der Sender und der zugeordnete Empfänger bilden eine Strahlachse. Zur Objektdetektion werden in der Auswerteeinheit die Empfangssignale der Empfänger ausgewertet und in Abhängigkeit hiervon als Objektfeststellungssignal ein binäres Schaltsignal generiert, dessen Schaltzustände angeben, ob sich ein Objekt im Überwachungsbereich befindet oder nicht. Ein Objekteingriff liegt vor, wenn wenigstens eine Strahlachse durch ein Objekt unterbrochen ist.

Der Betrieb des Lichtvorhangs erfolgt derart, dass die Strahlachsen, d.h. die Sender und Empfänger der einzelnen Strahlachsen, zyklisch einzeln nacheinander aktiviert werden. Bei dem in der DE 10 2008 050 943 A1 beschriebenen Lichtvorhang werden die einzelnen Sender über Schieberegister einzeln aktiviert. Ebenso werden die Empfänger über Schieberegister einzeln aktiviert. Die Synchronisierung der Sender- und Empfängeraktivierung erfolgt auf optischem Weg. Hierzu werden die Lichtstrahlen einer ausgewählten Strahlachse verwendet.

Zur Erhöhung der Nachweisempfindlichkeit des Lichtvorhangs werden die Empfangssignale verstärkt, bevor sie der Auswerteeinheit zugeführt werden.

Dabei ist es bekannt, einen oder mehrere Verstärker in einem Multiplexbetrieb derart zu betreiben, dass nacheinander mehrere Empfänger dem jeweiligen Verstärker zugeschaltet werden, so dass dessen Empfangssignale im Verstärker verstärkt werden.

Der Vorteil hierbei besteht darin, dass nicht für jeden Empfänger ein separater Verstärker vorgesehen werden muss, so dass nur wenig Bauteile empfangsseitig vorgesehen werden müssen.

Ein Nachteil bei derartigen Anordnungen besteht darin, dass mit einem Multiplexer durchgeführte Umschaltvorgänge, mit denen jeweils ein anderer Empfänger dem Verstärker zugeschaltet wird, zu Einschwingvorgängen in den verstärkten Empfangssignalen führen, d.h. die verstärkten Empfangssignale sind verfälscht. Daher ist nach jedem Umschaltvorgang eine Wartezeit erforderlich, bis die Einschwingvorgänge abgeklungen sind. Dies führt jedoch zu einer unerwünschten Erhöhung der Reaktionszeit des Lichtvorhangs bei der Objekterfassung.

Der Erfindung liegt die Aufgabe zugrunde, einen Lichtvorhang der eingangs genannten Art bereitzustellen, der einen konstruktiv einfachen Aufbau aufweist und mit welchem bei kurzen Reaktionszeiten eine sichere Objektdetektion durchführbar ist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich, mit einer Anordnung von Lichtstrahlen emittierenden Sendern, mit einer Anordnung von Lichtstrahlen empfangenden Empfängern und mit einer Auswerteeinheit, in welches in Abhängigkeit von Empfangssignalen der Empfänger, ein Objektfeststellungssignal in Form eines binären Schaltsignals generiert wird, dessen Schaltzustände angeben, ob ein Objekt im Überwachungsbereich vorhanden ist oder nicht. Wenigstens ein Verstärker ist vorhanden, der in einem Multiplexbetrieb derart betrieben wird, dass mit diesem zeitlich nacheinander Empfangssignale unterschiedlicher Empfänger verstärkt werden. Bei Umschaltvorgängen des Multiplexbetriebs sind auftretende Umschaltstörungen in den verstärkten Empfangssignalen mit in einer Steuerung generierten Kompensationssignal kompensiert.

Die Erfindung betrifft weiterhin ein entsprechendes Verfahren.

Der erfindungsgemäße Lichtvorhang weist eine Anordnung von Sendern auf, die vorteilhaft in einer Sendereinheit integriert sind. Weiterhin weist der Lichtvorhang vorteilhaft eine Empfängereinheit auf, in der eine Anordnung von Empfängern angeordnet sind. Die Sendereinheit und die Empfängereinheit sind an gegenüberliegenden Rändern des Überwachungsbereichs angeordnet. Jedem Sender ist vorteilhaft ein Empfänger zur Ausbildung einer Strahlachse so zugeordnet, dass bei freiem Überwachungsbereich die Lichtstrahlen eines Senders ungehindert zu dem zugeordneten Empfänger der jeweiligen Strahlachse geführt sind. Objekte im Überwachungsbereich werden dadurch erkannt, dass zumindest die Lichtstrahlen einer Strahlachse unterbrochen werden.

Prinzipiell kann der Lichtvorhang auch als Reflexions-Lichtvorhang ausgebildet sein. Dann sind die Sender und Empfänger in einer gemeinsamen Sender-/Empfängereinheit untergebracht, die an einem Rand des Überwachungsbereichs angeordnet ist. Am anderen Rand des Überwachungsbereichs befindet sich ein Reflektor als weiterer Bestandteil des Lichtvorhangs. Bei freiem Überwachungsbereich werden die Lichtstrahlen jedes Senders zum Reflektor geführt und von dort zurück zum zugeordneten Empfänger reflektiert.

Der erfindungsgemäße Lichtvorhang weist empfangsseitig wenigstens einen im Multiplexbetrieb betriebenen Verstärker auf, mit welchem zeitlich nacheinander Empfangssignale unterschiedlicher Empfänger verstärkt werden. Hierzu ist empfangsseitig ein Multiplexer vorgesehen, der den oder die Verstärker ansteuert.

Dadurch, dass nicht jedem Empfänger ein Verstärker zugeordnet sein muss, sondem dass der oder jeder Verstärker die Verstärkung von Empfangssignalen mehrerer Empfänger übernimmt, ergibt sich eine erhebliche Einsparung an Bauteilen, was den konstruktiven Aufwand des Lichtvorhangs reduziert.

Erfindungsgemäß werden Umschaltstörungen in den verstärkten Empfangssignalen, die bei Umschaltvorgängen des Multiplexbetriebs auftreten, dadurch reduziert, dass in einer Steuerung generierte Kompensationssignale an den oder die Verstärker ausgegeben werden. Mit den Kompensationssignalen werden Umschaltstörungen, insbesondere Einschwingvorgänge in den verstärkten Empfangssignalen, kompensiert, d.h. weitgehend unterdrückt.

Da somit keine nennenswerten Anteile von Einschwingvorgängen in den verstärkten Empfangssignalen mehr vorhanden sind, können die verstärkten Empfangssignale schneller und ohne große Wartezeiten in der Auswerteeinheit zur Generierung des Objektfeststellungssignals ausgewertet werden, wodurch sich kurze Reaktionszeiten ergeben.

Im einfachsten Fall ist nur ein Verstärker vorhanden, mit welchem alle Empfänger im Multiplexbetrieb betrieben werden.

Alternativ sind mehrere Verstärker vorhanden, mittels derer jeweils eine Gruppe der Empfänger im Multiplexbetrieb betrieben wird.

Die Gruppen von Empfängern können Kaskaden bilden, die im Wesentlichen selbständige, separat ansteuerbare Sensoreinheiten bilden.

Gemäß einer vorteilhaften Ausführungsform ist die Steuerung Bestandteil der Auswerteeinheit.

Damit ergibt sich ein besonders kompakter Aufbau der empfangsseitigen Elektronikkomponenten.

Vorteilhaft sind Kompensationssignale über eine Koppelschaltung dem wenigstens einen Verstärker zuführbar.

Dabei sind die Kompensationssignale dem oder den Verstärkern rückwirkungsfrei zugeführt.

Rückwirkungsfrei bedeutet, dass die Kompensationssignale nicht auf den jeweiligen Empfänger rückwirken, d.h. dessen Empfangssignale sind von den Kompensationssignalen unbeeinflusst. Dies kann insbesondere dadurch erreicht werden, dass die Kompensationsschaltung während des Empfangs von Lichtstrahlen im Empfänger deaktiviert ist.

Die Kompensationssignale können in Form von Spannungsteilern oder passiven Netzwerken realisiert sein.

Dabei können die Kompensationssignale Dioden oder Transistoren mit Vorzugsrichtung aufweisen. Die passiven Netzwerke können aus Halbleitern und passiven Bauelementen bestehen. Auch Verstärkerelemente können zur Realisierung von Kompensationssignalen eingesetzt werden.

Gemäß einer alternativen Ausgestaltung sind die Kompensationssignale Bussignale.

Dann werden die Kompensationssignale in einer Steuerung eines Bussystems erzeugt.

In diesem Fall können Bussignale Testsignale aufweisen, mittels derer ein oder die Verstärker getestet werden.

Vorteilhaft werden Testsignale zu Zeiten generiert, wo keine Empfangssignale der Empfänger erwartet, d.h. die Empfänger keine Lichtstrahlen der Sender empfangen. Die Testsignale werden über das Bussystem wieder in die Steuerung rückgelesen und dort mit Erwartungshaltungen, d.h. Sollsignalen verglichen, um so festzustellen, ob der jeweilige Empfänger fehlerfrei arbeitet.

Vorteilhaft sind mittels der Kompensationssignale verstärkte Empfangssignale bedämpft.

Damit werden Einschwingvorgänge in den verstärkten Empfangssignalen wirksam unterdrückt.

Vorteilhaft werden mittels der Steuerung die Amplituden und/oder Kurvenformen von Kompensationssignalen vorgegeben.

Weiterhin können pulsförmige Kompensationssignale vorhanden sein, deren Pulsbreiten durch die Steuerung vorgebbar sind.

Weiterhin vorteilhaft werden die Kompensationssignale während der Umschaltvorgänge geregelt.

Die Kompensationssignale sind generell in Form von Strom- oder Spannungssignalen gebildet. Die Regelung der Kompensationssignale erfolgt auf vorgegebene Sollwerten. Insbesondere können Differenzregler eingesetzt werden, die eine unmittelbare Reaktion auf Störimpulse ermöglichen.

Besonders vorteilhaft sind die Kompensationssignale auf einen Ausgang und/oder Eingang des oder jedes Verstärkers geführt.

In jedem Fall werden die Verstärker mit den Kompensationssignalen direkt beaufschlagt.

Gemäß einer ersten Variante werden die Kompensationssignale für alle Empfänger gleich vorgegeben.

Gemäß einer alternativen Ausgestaltung werden die Kompensationssignale für alle Empfänger individuell vorgegeben.

Gemäß einer weiteren alternativen Ausgestaltung werden die Kompensationssignale für unterschiedliche Gruppen von Empfängern individuell vorgegeben.

Gemäß einer vorteilhaften Ausführungsform werden die Kompensationssignale in einem Einlernvorgang ermittelt.

Die so eingelernten Kompensationssignale können dann für einen auf den Einlernvorgang folgenden Arbeitsbetrieb des Lichtvorhangs übernommen werden.

Weiterhin ist es möglich, dass in einem auf einen Einlernvorgang folgenden Arbeitsbetrieb die eingelernten Kompensationssignale als Grund-Kompensationssignale eingesetzt werden. Zusätzlich können Teil-Kompensationssignale generiert werden, welche die Grund-Kompensationssignale ergänzen.

Die Grund-Kompensationssignale bilden dann eine Basis-Kompensation für den Anfang des Arbeitsbetriebs. Mit den Teil-Kompensationssignalen können dann zusätzlich Störeffekte durch Bauteildriften und dergleichen kompensiert werden.

Gemäß einer vorteilhaften Ausgestaltung ist der Lichtvorhang ein Sicherheitssensor. Der Lichtvorhang weist dann einen fehlersicheren Aufbau auf und kann so in sicherheitstechnischen Applikationen eingesetzt werden. Der fehlersichere Aufbau kann insbesondere durch eine mehrkanalige Auswerteeinheit realisiert werden.

Die Erfindung wird im Folgenden anhand der Zeichnungen erläutert. Es zeigen:
- Figur 1:: Schematische Darstellung eines Ausführungsbeispiels der erfindungsgemäßen Lichtvorhänge.
- Figur 2:: Empfangsseitige Schaltungsanordnung für den Lichtvorhang gemäß Figur 1.
- Figur 3:: Ausführungsbeispiele für Kopplungsschaltungen für die Schaltungsanordnung gemäß Figur 2.
- Figur 4:: Zeitdiagramm für verstärkte Empfangssignale von Empfängern des Lichtvorhangs gemäß mit durch Umschaltvorgänge eines Multiplexers verursachten Umschaltstörungen.
- Figur 5a-d:: Beispiele für Kompensationssignale zur Kompensation von Umschaltstörungen in verstärkten Empfangssignalen der Empfänger des Lichtvorhangs.
- Figur 6:: Zeitdiagramm für verstärkte Empfangssignale von Empfängern des Lichtvorhangs bei mit Kompensationssignalen kompensierten Umschaltstörungen.
- Figur 7a-b:: Zeitdiagramme für die Einspeisung von Testsignalen in die Schaltungsanordnung gemäß Figur 2.

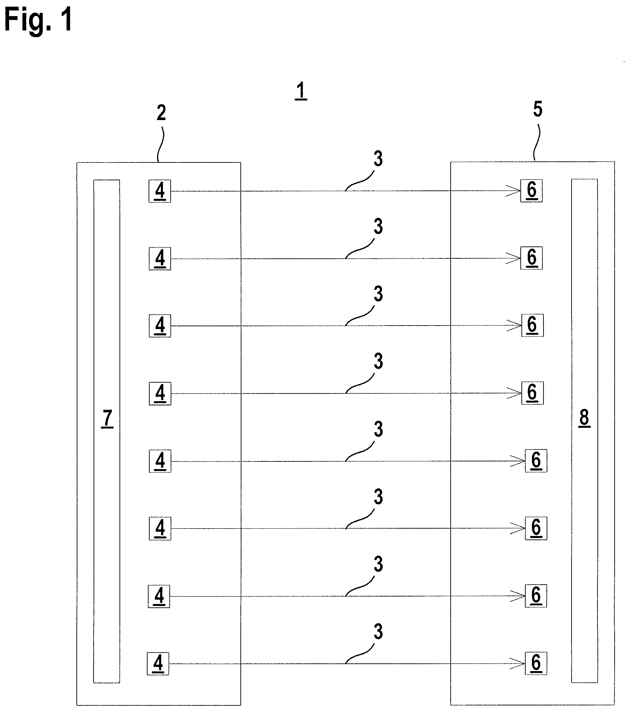

Figur 1 zeigt den prinzipiellen Aufbau des erfindungsgemäßen Lichtvorhangs 1. Der Lichtvorhang 1 umfasst eine Sendereinheit 2, in deren Gehäuse eine Reihenanordnung von Lichtstrahlen 3 emittierenden Sendern 4 in Form von Sendedioden angeordnet ist. Die Sendedioden sind von Leuchtdioden oder dergleichen gebildet. Der Lichtvorhang 1 weist weiterhin eine Empfängereinheit 5 auf, in deren Gehäuse eine Reihenanordnung von Lichtstrahlen 3 empfangenden Empfängern 6 in Form von Empfangsdioden vorgesehen ist. Die Empfangsdioden sind von Foto-PIN-Dioden oder Foto-Dioden gebildet. Alternativ können auch Foto-Transistoren eingesetzt werden.

Die Sendereinheit 2 und die Empfängereinheit 5 sind an gegenüberliegenden Rändern eines Überwachungsbereichs angeordnet. Bei freiem Überwachungsbereich treffen die von jeweils einem Sender 4 emittierten Lichtstrahlen 3 auf einen zugeordneten, gegenüberliegenden Empfänger 6. Ein Sender 4 und der hierzu zugeordnete Empfänger 6 bilden jeweils eine Strahlachse. Der Senderbetrieb wird durch eine Steuereinheit 7 in der Sendereinheit 2 gesteuert und bewertet. Der Empfängerbetrieb wird durch eine Auswerteeinheit 8 in der Empfängereinheit 5 gesteuert. Die Sender 4 und Empfänger 6 der einzelnen Strahlachsen werden durch eine optische Synchronisierung des Lichtvorhangs 1 zyklisch einzeln oder zu mehreren nacheinander aktiviert. Mit den parallel verlaufenden Lichtstrahlen 3 der Strahlachsen wird ein in einer Ebene verlaufendes Schutzfeld überwacht.

In der Auswerteeinheit 8 werden hierzu die Empfangssignale der Empfangsdioden ausgewertet, um als Objektfeststellungssignal ein binäres Schaltsignal zu erzeugen. Der erste Schaltzustand entspricht einer Objektmeldung, der zweite Schaltzustand einem freien Schutzfeld.

Der Lichtvorhang 1 bildet einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

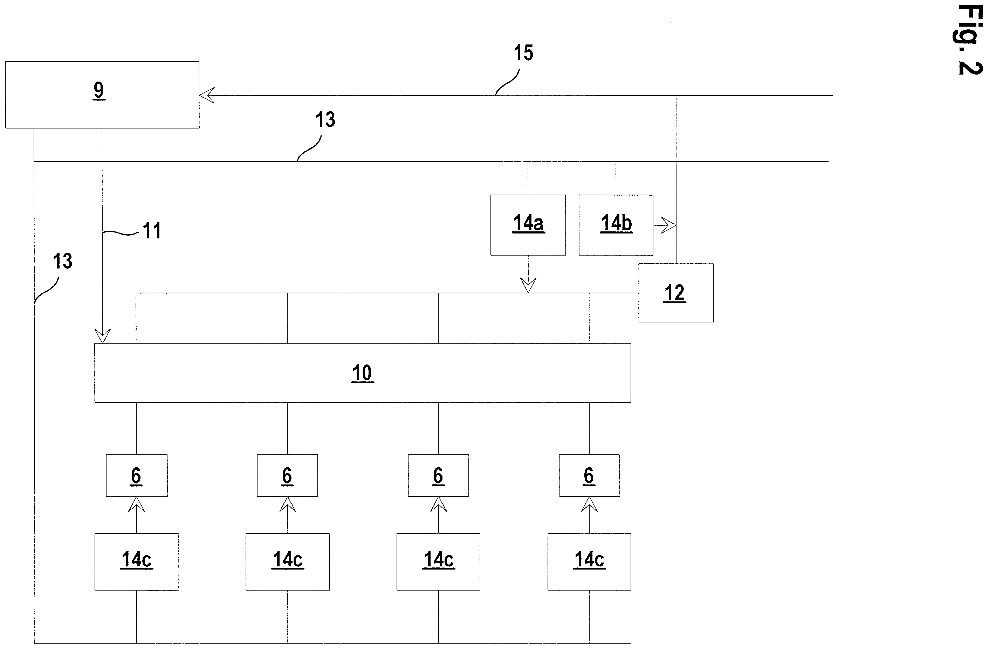

Figur 2 zeigt eine empfangsseitige Schaltungsanordnung für den Lichtvorhang 1 gemäß Figur 1.

Der Übersichtlichkeit halber sind nur vier der Empfänger 6 des Lichtvorhangs 1 in Figur 2 dargestellt.

Die Schaltungsanordnung weist eine Steuerung 9 auf, die im vorliegenden Fall Bestandteil der Auswerteeinheit 8 ist. Die Steuerung 9 steuert einen Multiplexer 10 durch Ausgabe von Steuersignalen 11. Dadurch sind in einem Multiplexbetrieb die Empfänger 6 zeitlich nacheinander einem Verstärker 12 zugeschaltet. Dadurch ist nur ein Verstärker 12 erforderlich, um die Empfangssignale aller Empfänger 6 zu verstärken.

Die Anordnung gemäß Figur 2 kann auch auf mehrere Verstärker 12 erweitert sein, wobei dann jedem Verstärker 12 eine Gruppe von Empfängern 6 zugeordnet ist.

Die Steuerung 9 gibt über eine erste Leitung 13 Kompensationssignale an eine erste Koppelschaltung 14a aus, die die Kompensationssignale am Eingang des Verstärkers 12 einspeist. Die Steuerung 9 gibt weiterhin über eine zweite Leitung 15 Kompensationssignale an eine zweite Koppelschaltung 14b aus, die Kompensationssignale am Ausgang des Verstärkers 12 einspeist. Weiterhin speist die Steuerung 9 über die erste Leitung 13 Kompensationssignale in Koppelschaltungen 14c ein, die jeweils einem Empfänger 6 zugeordnet sind.

Die Koppelschaltungen 14a bis 14c müssen nicht alle gleichzeitig vorgesehen sein. Besonders vorteilhaft ist nur die Koppelschaltung 14a oder die Koppelschaltung 14b vorhanden.

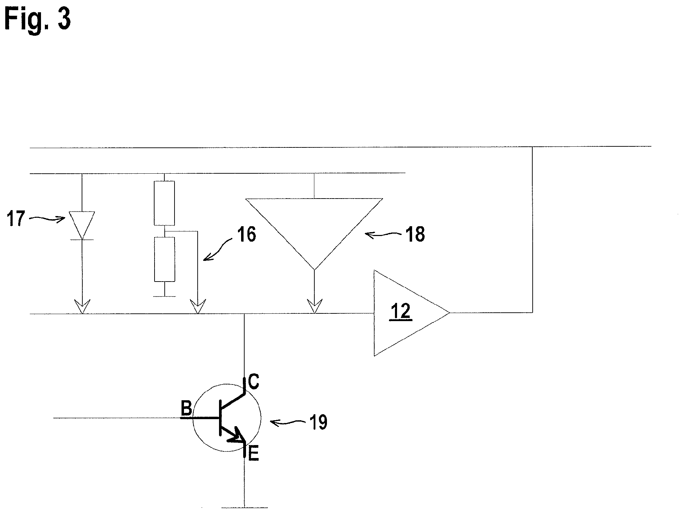

Figur 3 zeigt mögliche Bauteile für die Koppelschaltungen 14a bis 14c, die einem Verstärker 12 zugeordnet sein können.

Diese Bauteile umfassen ein passives Netzwerk, das im vorliegenden Fall ein Spannungsteiler 16 ist, Halbleiterelemente, wie z.B. eine Diode 17, Verstärkerelemente 18 und oder eine Bedämpfungsschaltung 19.

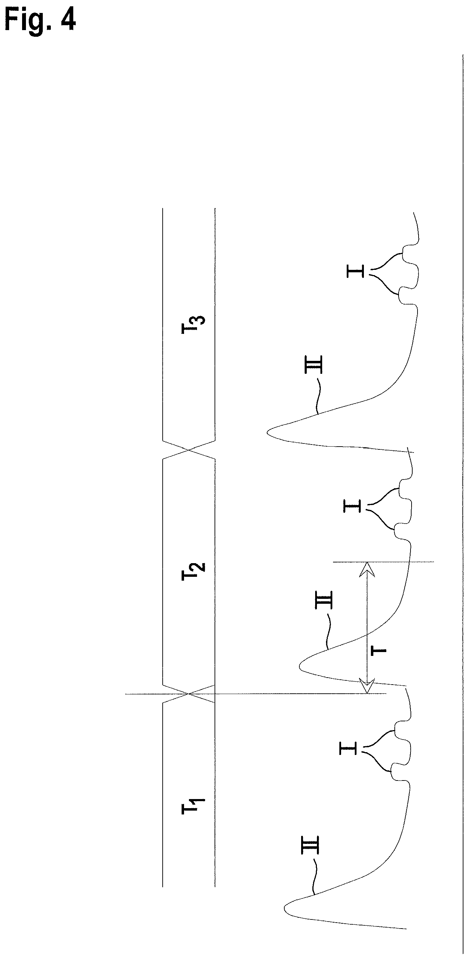

Figur 4 zeigt Zeitdiagramme für verstärkte Empfangssignale ohne die Einspeisung von Kompensationssignalen für die Anordnung gemäß Figur 2. Mit T₁, T₂, T₃ sind Zeitintervalle bezeichnet, in denen nacheinander ein Empfänger 6 aktiviert ist und dessen Empfangssignale im Verstärker 12 verstärkt werden.

Wie Figur 4 zeigt sind den Nutzsignalen (bezeichnet mit I) Umschaltstörungen II bedingt durch die Umschaltvorgänge des Multiplexers 10 überlagert. Um eine fehlerfreie Auswertung der Nutzsignale I in der Auswerteeinheit 8 durchzuführen, muss eine Einschwingzeit T abgewartet werden, bis die Umschaltstörungen II abgeklungen sind. Erst dann ist eine Auswertung der verstärkten Empfangssignale in der Auswerteeinheit 8 möglich, wodurch die Reaktionszeit b bei der Generierung des Objektfeststellungssignals unerwünscht erhöht wird.

Diese Nachteile werden durch die erfindungsgemäßen Kompensationssignale vermieden.

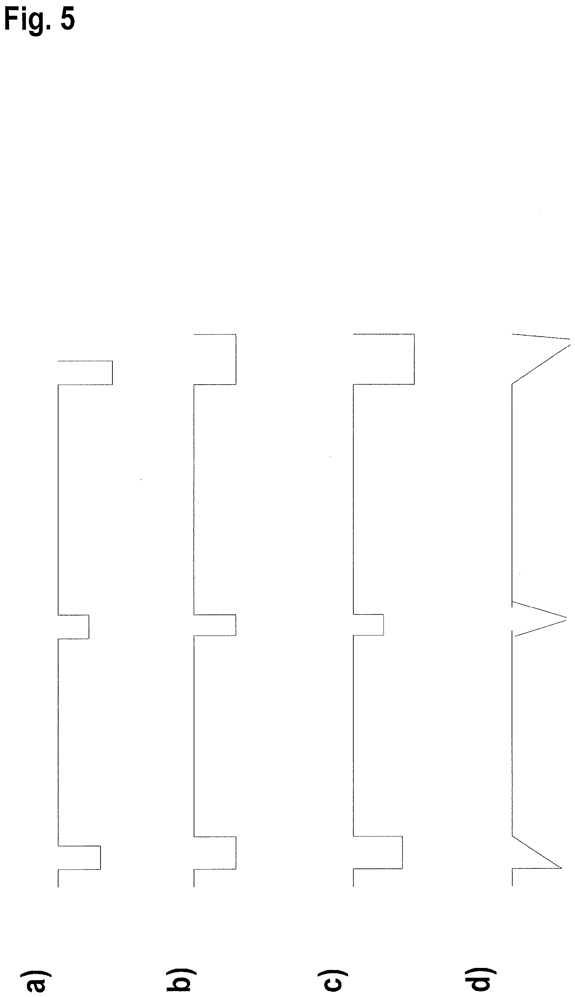

Die Figuren 5a bis 5d zeigen Pulsfolgen unterschiedlicher pulsförmiger Kompensationssignale. Bei der Ausführungsform gemäß Figur 5a variieren die Pulshöhen der Kompensationssignale. Bei der Ausführungsform gemäß Figur 5b variieren die Pulsbreiten der Kompensationssignale. Bei der Ausführungsform gemäß Figur 5c variieren Pulsbreiten und Pulsbreiten der Kompensationssignale. Bei der Ausführungsform gemäß Figur 5d variieren die Kurvenformen der Kompensationssignale. Die Vorgabe der Kompensationssignale erfolgt durch die Steuerung 9.

Vorteilhaft sind mittels der Kompensationssignale verstärkte Empfangssignale bedämpft.

Weiterhin können die Kompensationssignale während der Umschaltvorgänge geregelt werden.

Im einfachsten Fall werden die Kompensationssignale für alle Empfänger 6 gleich vorgegeben.

Alternativ werden die Kompensationssignale für alle Empfänger 6 individuell vorgegeben.

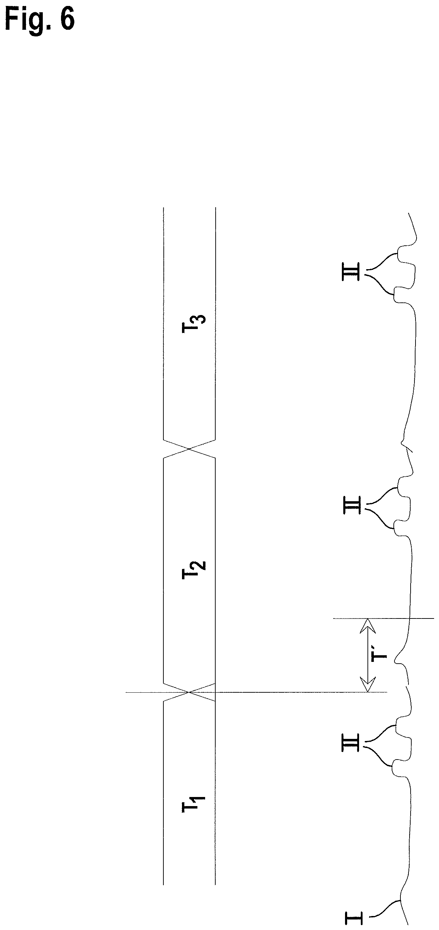

Das Ergebnis der Kompensation von Umschaltstörungen mittels Kompensationssignalen zeigt Figur 6. Die Umschaltstörungen durch Einschwingvorgänge sind in den verstärkten Empfangssignalen nahezu vollständig eliminiert, so dass die Nutzsignale I der verstärkten Empfangssignale mit einer geringen Wartezeit T' in die Auswerteeinheit 8 zur Auswertung übergeben werden können.

Gemäß einer Variante der Ausführungsform gemäß Figur 2 kann die Steuerung 9 Bestandteil eines Bussystems sein, wobei dann Kompensationssignale über Busleitungen dem Verstärker 12 zugeführt sind.

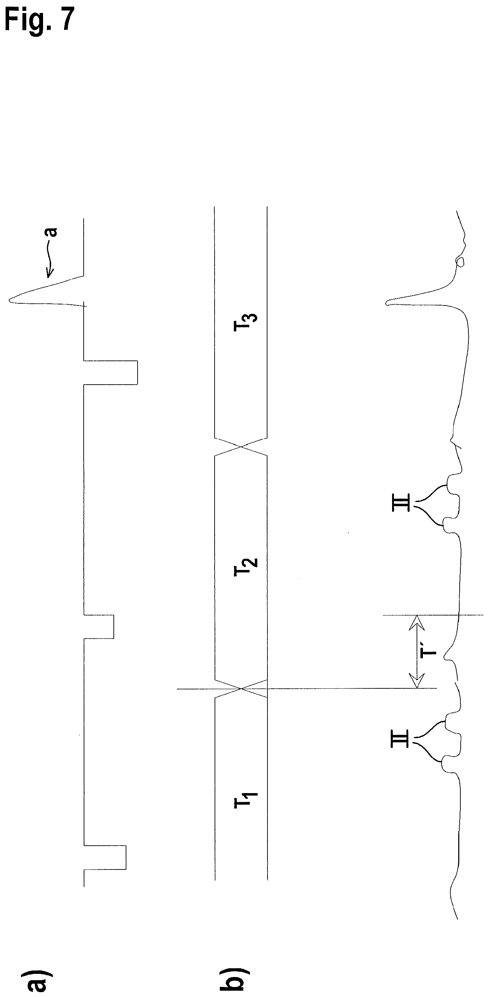

In diesem Fall können zusätzlich zu Kompensationssignalen auch Testsignale a dem Verstärker 12 zugeführt werden (Figur 7a). Die Reaktion des Verstärkers 12 (in Figur 7b mit b bezeichnet) wird in die Steuerung 9 rückgelesen und dort mit einer Erwartungshaltung verglichen, die in Form von Sollwerten vorgegeben sein kann. Dadurch kann der Verstärker 12 getestet werden.

### Bezugszeichenliste

- (1): Lichtvorhang
- (2): Sendereinheit
- (3): Lichtstrahl
- (4): Sender
- (5): Empfängereinheit
- (6): Empfänger
- (7): Steuereinheit
- (8): Auswerteeinheit
- (9): Steuerung
- (10): Multiplexer
- (11): Steuersignal
- (12): Verstärker
- (13): Leitung
- (14a): Koppelschaltung
- (14b): Koppelschaltung
- (14c): Koppelschaltung
- (15): Leitung
- (16): Spannungsteiler
- (17): Diode
- (18): Verstärkerelement
- (19): Bedämpfungsschaltung

- (T): Einschwingzeit
- (T): Wartezeit
- (T₁): Zeitintervall
- (T₂): Zeitintervall
- (T₃): Zeitintervall

- I: Nutzsignal
- II: Umschaltstörung

- (a): Testsignal
- (b): Reaktionszeit

## Patentansprüche

1. Lichtvorhang (1) zur Erfassung von Objekten in einem Überwachungsbereich, mit einer Anordnung von Lichtstrahlen (3) emittierenden Sendern (4), mit einer Anordnung von Lichtstrahlen (3) empfangenden Empfängern (6), und mit einer Auswerteeinheit (8), in welcher in Abhängigkeit von Empfangssignalen der Empfänger (6) ein Objektfeststellungssignal in Form eines binären Schaltsignals, dessen Schaltzustände angeben, ob ein Objekt im Überwachungsbereich vorhanden ist oder nicht, generiert wird, **dadurch gekennzeichnet, dass** wenigstens ein Verstärker (12) vorhanden ist, der in einem Multiplexbetrieb derart betrieben wird, dass mit diesem zeitlich nacheinander Empfangssignale unterschiedlicher Empfänger (6) verstärkt werden, und dass bei Umschaltvorgängen des Multiplexbetriebs auftretende Umschaltstörungen II in den verstärkten Empfangssignalen mit in einer Steuerung (9) generierten Kompensationssignalen kompensiert sind.

2. Lichtvorhang (1) nach Anspruch 1, **dadurch gekennzeichnet, dass** nur ein Verstärker (12) vorhanden ist, mit welchem alle Empfänger (6) im Multiplexbetrieb betrieben werden.

3. Lichtvorhang (1) nach Anspruch 1, **dadurch gekennzeichnet, dass** mehrere Verstärker (12) vorhanden sind, mittels derer jeweils eine Gruppe von Empfängern (6) im Multiplexbetrieb betrieben wird.

4. Lichtvorhang (1) nach einem der Ansprüche 1 bis 3, **dadurch gekennzeichnet, dass** die Steuerung (9) Bestandteil der Auswerteeinheit (8) ist.

5. Lichtvorhang (1) nach einem der Ansprüche 1 bis 4, **dadurch gekennzeichnet, dass** Kompensationssignale über eine Koppelschaltung (14a-c) dem wenigstens einen Verstärker (12) zuführbar sind.

6. Lichtvorhang (1) nach Anspruch 5, **dadurch gekennzeichnet, dass** die Kompensationssignale dem oder den Verstärkern (12) rückwirkungsfrei zugeführt sind.

7. Lichtvorhang (1) nach einem der Ansprüche 1 bis 3, **dadurch gekennzeichnet, dass** die Kompensationssignale Bussignale sind.

8. Lichtvorhang (1) nach Anspruch 7, **dadurch gekennzeichnet, dass** Bussignale Testsignale (a) aufweisen, mittels derer der oder die Verstärker (12) getestet werden.

9. Lichtvorhang (1) nach einem der Ansprüche 1 bis 8, **dadurch gekennzeichnet, dass** mittels der Kompensationssignale verstärkte Empfangssignale bedämpft sind.

10. Lichtvorhang (1) nach einem der Ansprüche 1 bis 9, **dadurch gekennzeichnet, dass** die Kompensationssignale während der Umschaltvorgänge geregelt werden.

11. Lichtvorhang (1) nach einem der Ansprüche 1 bis 10, **dadurch gekennzeichnet, dass** die Kompensationssignale auf einen Ausgang und/oder Eingang des oder jedes Verstärkers (12) geführt sind.

12. Lichtvorhang (1) nach einem der Ansprüche 1 bis 11, **dadurch gekennzeichnet, dass** die Kompensationssignale für alle Empfänger (6) gleich vorgegeben werden.

13. Lichtvorhang (1) nach einem der Ansprüche 1 bis 12, **dadurch gekennzeichnet, dass** die Kompensationssignale für alle Empfänger (6) individuell vorgegeben werden.

14. Lichtvorhang (1) nach Anspruch 3, **dadurch gekennzeichnet, dass** die Kompensationssignale für unterschiedliche Gruppen von Empfängern (6) individuell vorgegeben werden.

15. Lichtvorhang (1) nach einem der Ansprüche 1 bis 14, **dadurch gekennzeichnet, dass** mittels der Steuerung (9) die Amplitude und/oder Kurvenform von Kompensationssignalen vorgegeben wird.

16. Lichtvorhang (1) nach einem der Ansprüche 1 bis 15, **dadurch gekennzeichnet, dass** pulsförmige Kompensationssignale vorhanden sind, deren Pulsbreiten durch die Steuerung (9) vorgebbar sind.

17. Lichtvorhang (1) nach einem der Ansprüche 1 bis 16, **dadurch gekennzeichnet, dass** die Kompensationssignale in einem Einlernvorgang ermittelt werden.

18. Lichtvorhang (1) nach Anspruch 17, **dadurch gekennzeichnet, dass** in einem auf einen Einlernvorgang folgenden Arbeitsbetrieb die eingelernten Kompensationssignale als Grund-Kompensationssignale eingesetzt werden, und dass zusätzlich die Grund-Kompensationssignale ergänzende Teil-Kompensationssignale generiert werden.

19. Lichtvorhang (1) nach Anspruch 18, **dadurch gekennzeichnet, dass** dieser ein Sicherheitssensor ist.

20. Verfahren zur Erfassung von Objekten in einem Überwachungsbereich mittels eines Lichtvorhangs (1) mit einer Anordnung von Lichtstrahlen (3) emittierenden Sendern (4), mit einer Anordnung von Lichtstrahlen (3) empfangenden Empfängern (6), und mit einer Auswerteeinheit (8), in welcher in Abhängigkeit von Empfangssignalen der Empfänger (6) ein Objektfeststellungssignal in Form eines binären Schaltsignals, dessen Schaltzustände angeben, ob ein Objekt im Überwachungsbereich vorhanden ist oder nicht, generiert wird, **dadurch gekennzeichnet, dass** wenigstens ein Verstärker (12) vorhanden ist, der in einem Multiplexbetrieb derart betrieben wird, dass mit diesem zeitlich nacheinander Empfangssignale unterschiedlicher Empfänger (6) verstärkt werden, und dass bei Umschaltvorgängen des Multiplexbetriebs auftretende Umschaltstörungen II in den verstärkten Empfangssignalen mit in einer Steuerung (9) generierten Kompensationssignal kompensiert werden.

## Claims

1. A light curtain (1) for detecting objects in a monitoring area, having an arrangement of transmitters (4) emitting light beams (3), having an arrangement of receivers (6) receiving light beams (3), and having an evaluation unit (8) in which an object detection signal in the form of a binary switching signal, the switching states of which indicate whether an object is present in the monitoring area or not, is generated as a function of received signals from the receivers (6), is generated, **characterised in that** at least one amplifier (12) is provided which is operated in a multiplex mode in such a way that it is used to amplify received signals from different receivers (6) in succession over time, and **in that** switching interference II occurring in the amplified received signals during switching operations of the multiplex mode is compensated for by compensation signals generated in a controller (9).

2. A light curtain (1) according to claim 1, **characterised in that** only one amplifier (12) is present, with which all receivers (6) are operated in multiplex mode.

3. A light curtain (1) according to claim 1, **characterised in that** a plurality of amplifiers (12) are provided, by means of which a group of receivers (6) is operated in multiplex mode in each case.

4. A light curtain (1) according to one of claims 1 to 3, **characterised in that** the control unit (9) is part of the evaluation unit (8).

5. A light curtain (1) according to one of claims 1 to 4, **characterised in that** compensation signals can be fed to the at least one amplifier (12) via a coupling circuit (14a-c).

6. A light curtain (1) according to claim 5, **characterised in that** the compensation signals are fed to the amplifier or amplifiers (12) without feedback.

7. A light curtain (1) according to one of claims 1 to 3, **characterised in that** the compensation signals are bus signals.

8. A light curtain (1) according to claim 7, **characterised in that** bus signals comprise test signals (a) by means of which the amplifier or amplifiers (12) are tested.

9. A light curtain (1) according to one of claims 1 to 8, **characterised in that** amplified received signals are attenuated by means of the compensation signals.

10. A light curtain (1) according to one of claims 1 to 9, **characterised in that** the compensation signals are regulated during the switching operations.

11. A light curtain (1) according to one of claims 1 to 10, **characterised in that** the compensation signals are routed to an output and/or input of the or each amplifier (12).

12. A light curtain (1) according to one of claims 1 to 11, **characterised in that** the compensation signals are specified in the same way for all receivers (6).

13. A light curtain (1) according to one of claims 1 to 12, **characterised in that** the compensation signals are specified individually for all receivers (6).

14. A light curtain (1) according to claim 3, **characterised in that** the compensation signals are specified individually for different groups of receivers (6).

15. A light curtain (1) according to one of claims 1 to 14, **characterised in that** the amplitude and/or waveform of compensation signals is predetermined by means of the controller (9).

16. A light curtain (1) according to one of claims 1 to 15, **characterised in that** pulse-shaped compensation signals are present, the pulse widths of which can be preset by the controller (9).

17. A light curtain (1) according to one of claims 1 to 16, **characterised in that** the compensation signals are determined in a teach-in process.

18. A light curtain (1) according to claim 17, **characterised in that** the taught-in compensation signals are used as basic compensation signals in an operating mode following a teach-in process, and **in that** additional partial compensation signals are generated to supplement the basic compensation signals.

19. A light curtain (1) according to claim 18, **characterised in that** this is a safety sensor.

20. A method for detecting objects in a surveillance area by means of a A light curtain (1) with an arrangement of transmitters (4) emitting light beams (3), with an arrangement of receivers (6) receiving light beams (3), and with an evaluation unit (8) in which an object detection signal in the form of a binary switching signal, the switching states of which indicate whether an object is present in the surveillance area or not, is generated as a function of received signals from the receivers (6), is generated, **characterised in that** at least one amplifier (12) is present which is operated in a multiplex mode in such a way that it is used to amplify received signals from different receivers (6) in succession over time, and **in that** switching interference II occurring in the amplified received signals during switching operations of the multiplex mode is compensated for by a compensation signal generated in a controller (9).

## Revendications

1. Rideau lumineux (1) pour la détection d'objets dans une zone de surveillance, comportant un agencement d'émetteurs (4) émettant des faisceaux lumineux (3), comportant un agencement de récepteurs (6) recevant des faisceaux lumineux (3), et comportant une unité d'évaluation (8) dans laquelle un signal de détection d'objet sous la forme d'un signal de commutation binaire, dont les états de commutation indiquent si un objet est présent dans la zone de surveillance ou non, est généré en fonction des signaux reçus des récepteurs (6), est généré, **caractérisé par** la présence d'au moins un amplificateur (12) fonctionnant en mode multiplex de telle sorte qu'il est utilisé pour amplifier les signaux reçus de différents récepteurs (6) successivement dans le temps, et par le fait que l'interférence de commutation II se produisant dans les signaux reçus amplifiés pendant les opérations de commutation du mode multiplex est compensée par des signaux de compensation générés dans un dispositif de commande (9).

2. Rideau lumineux (1) selon la revendication 1, **caractérisé par** la présence d'un seul amplificateur (12) avec lequel tous les récepteurs (6) fonctionnent en mode multiplex.

3. Rideau lumineux (1) selon la revendication 1, **caractérisé en ce que** plusieurs amplificateurs (12) sont prévus, au moyen desquels un groupe de récepteurs (6) est exploité en mode multiplex dans chaque cas.

4. Rideau lumineux (1) selon l'une des revendications 1 à 3, **caractérisé par le fait que** l'unité de commande (9) fait partie de l'unité d'évaluation (8).

5. Rideau lumineux (1) selon l'une des revendications 1 à 4, **caractérisé par le fait que** les signaux de compensation peuvent être envoyés à l'amplificateur (12) au moins via un circuit de couplage (14a-c).

6. Rideau lumineux (1) selon la revendication 5, **caractérisé par le fait que** les signaux de compensation sont envoyés à l'amplificateur ou aux amplificateurs (12) sans rétroaction.

7. Rideau lumineux (1) selon l'une des revendications 1 à 3, **caractérisé par le fait que** les signaux de compensation sont des signaux de bus.

8. Rideau lumineux (1) selon la revendication 7, **caractérisé par le fait que** les signaux de bus comprennent des signaux de test (a) au moyen desquels l'amplificateur ou les amplificateurs (12) sont testés.

9. Rideau lumineux (1) selon l'une des revendications 1 à 8, **caractérisé par le fait que** les signaux reçus amplifiés sont atténués au moyen des signaux de compensation.

10. Rideau lumineux (1) selon l'une des revendications 1 à 9, **caractérisé par le fait que** les signaux de compensation sont régulés pendant les opérations de commutation.

11. Rideau lumineux (1) selon l'une des revendications 1 à 10, **caractérisé par le fait que** les signaux de compensation sont acheminés vers une sortie et/ou une entrée de l'amplificateur (12) ou de chacun d'eux.

12. Rideau lumineux (1) selon l'une des revendications 1 à 11, **caractérisé par le fait que** les signaux de compensation sont spécifiés de la même manière pour tous les récepteurs (6).

13. Rideau lumineux (1) selon l'une des revendications 1 à 12, **caractérisé par le fait que** les signaux de compensation sont spécifiés individuellement pour tous les récepteurs (6).

14. Rideau lumineux (1) selon la revendication 3, **caractérisé par le fait que** les signaux de compensation sont spécifiés individuellement pour différents groupes de récepteurs (6).

15. Rideau lumineux (1) selon l'une des revendications 1 à 14, **caractérisé par le fait que** l'amplitude et/ou la forme d'onde des signaux de compensation est prédéterminée au moyen du dispositif de commande (9).

16. Rideau lumineux (1) selon l'une des revendications 1 à 15, **caractérisé par** la présence de signaux de compensation en forme d'impulsion, dont les largeurs d'impulsion peuvent être prédéfinies par le dispositif de commande (9).

17. Rideau lumineux (1) selon l'une des revendications 1 à 16, **caractérisé par le fait que** les signaux de compensation sont déterminés dans un processus d'apprentissage.

18. Rideau lumineux (1) selon la revendication 17, **caractérisé par le fait que** les signaux de compensation appris sont utilisés comme signaux de compensation de base dans un mode de fonctionnement après un processus d'apprentissage, et **par le fait que** des signaux de compensation partiels supplémentaires sont générés pour compléter les signaux de compensation de base.

19. Rideau lumineux (1) selon la revendication 18, **caractérisé par le fait qu'**il s'agit d'un capteur de sécurité.

20. Procédé de détection d'objets dans une zone de surveillance au moyen d'un rideau lumineux (1) comportant un ensemble d'émetteurs (4) émettant des faisceaux lumineux (3), un ensemble de récepteurs (6) recevant des faisceaux lumineux (3) et une unité d'évaluation (8) dans laquelle un signal de détection d'objet sous la forme d'un signal de commutation binaire, dont les états de commutation indiquent si un objet est présent ou non dans la zone de surveillance, est généré en fonction des signaux reçus en provenance des récepteurs (6), est généré, **caractérisé par** la présence d'au moins un amplificateur (12) fonctionnant en mode multiplex de telle sorte qu'il est utilisé pour amplifier les signaux reçus de différents récepteurs (6) successivement dans le temps, et par le fait que l'interférence de commutation II se produisant dans les signaux reçus amplifiés pendant les opérations de commutation du mode multiplex est compensée par un signal de compensation généré dans un dispositif de commande (9).
